# EUROPEAN PATENT APPLICATION

(11) **EP 4 385 951 A1**
(43) Date of publication of application: **19.06.2024**
(21) Application number: 22855888.8
(22) Date of filing: 09.08.2022
(51) Int. Cl.: C01G 41/00, C09K 3/00, B01J 13/14

(54) **ORGANIC-INORGANIC HYBRID INFRARED RAY-ABSORBING PARTICLES, INFRARED RAY-ABSORBING PARTICLE DISPERSION, AND METHOD FOR PRODUCING ORGANIC-INORGANIC HYBRID INFRARED RAY-ABSORBING PARTICLES**

(30) Priority: 12.08.2021 JP 2021131712; 24.02.2022 JP 2022026872
(71) Applicant: SUMITOMO METAL MINING CO., LTD., Tokyo 105-8716 (JP); National University Corporation Yamagata University, Yamagata-shi, Yamagata 990-8560 (JP)
(72) Inventor: IGARI, Atsushi, Isa-shi, Kagoshima 895-2501 (JP); CHONAN, Takeshi, Isa-shi, Kagoshima 895-2501 (JP); KAWAGUCHI, Seigou, Yonezawa-shi, Yamagata 992-8510 (JP); KUDO, Takumi, Yonezawa-shi, Yamagata 992-8510 (JP)
(74) Representative: Jones, Nicholas Andrew
(86) International application number: PCT/JP2022/030465
(87) International publication number: WO 2023/017826

(57) **Abstract**

Organic-inorganic hybrid infrared absorbing particles including: a resin capsule; and an infrared absorbing particle placed in the resin capsule, wherein a content of the infrared absorbing particle is 15 mass% or more and 55 mass% or less.

## Description

### Technical Field

The present invention relates to organic-inorganic hybrid infrared absorbing particles, an infrared absorbing particle dispersion, and a method of producing the organic-inorganic hybrid infrared absorbing particles.

### Background Art

Infrared absorbing particles that absorb infrared light can be used for various applications, for example, a heat shielding film and the like. Therefore, various studies have been conducted.

For example, in Patent Document 1, the applicant of the present application disclosed that particles of the infrared-shielding material containing tungsten oxide fine particles and/or composite tungsten oxide fine particles are finely granulated to a particle diameter of 1 nm or more and 800 nm or less, and the fine particles of the infrared-shielding material are dispersed in a medium, and accordingly, a fine particle dispersion of the infrared-shielding material having excellent optical characteristics can be produced, i.e., more efficient shielding of sunlight, especially in the near-infrared region, while at the same time retaining transmittance in the visible region.

### RELATED-ART DOCUMENT

### Patent Document

Patent Document 1: International Publication No. WO 2005/037932

### Summary of Invention

### Technical Problem

However, the inventors of the present invention have found that the infrared absorbing particles may exhibit degraded infrared absorbing characteristics when exposed to a chemical environment such as high temperature acid or alkali. Therefore, in recent years, there has been a demand for infrared absorbing materials having excellent chemical resistance and infrared absorbing characteristics.

One aspect of the present invention is to provide organic-inorganic hybrid infrared absorbing particles having excellent chemical resistance and infrared absorbing characteristics.

### Solution to Problem

According to one aspect of the present invention, organic-inorganic hybrid infrared absorbing particles include: a resin capsule; and an infrared absorbing particle placed in the resin capsule, wherein a content of the infrared absorbing particle is 15 mass% or more and 55 mass% or less.

### Advantageous Effects of Invention

According to one aspect of the present invention, organic-inorganic hybrid infrared absorbing particles having excellent chemical resistance and infrared absorbing characteristics can be provided.

### Brief Description of the Drawings

[FIG. 1]

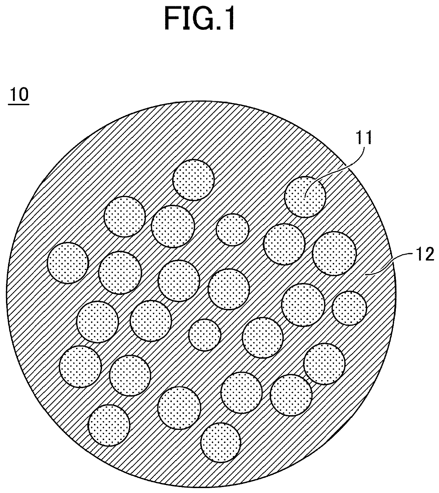

   FIG. 1 is a cross-sectional schematic view of an organic-inorganic hybrid infrared absorbing particle of an embodiment.
[FIG. 2]

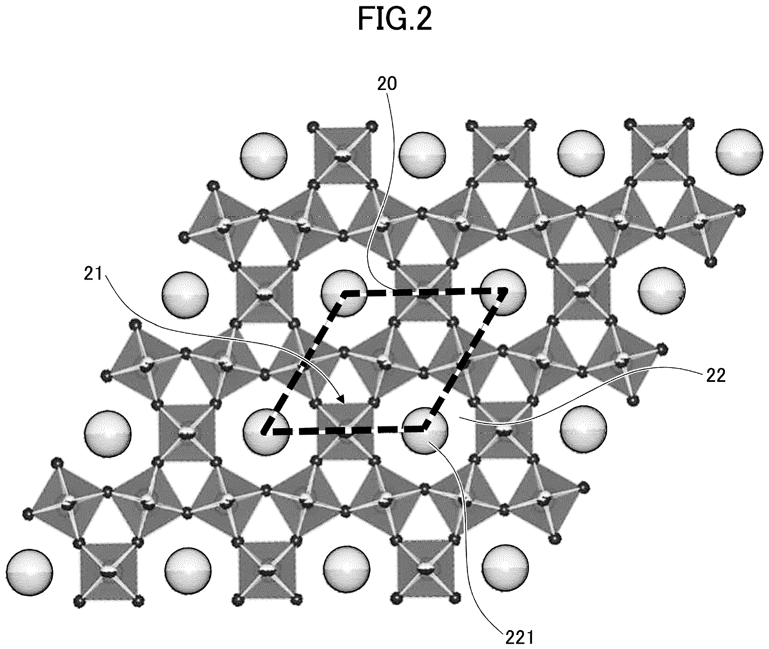

   FIG. 2 is an explanatory view of a hexagonal crystal structure of a composite tungsten oxide.
[FIG. 3]

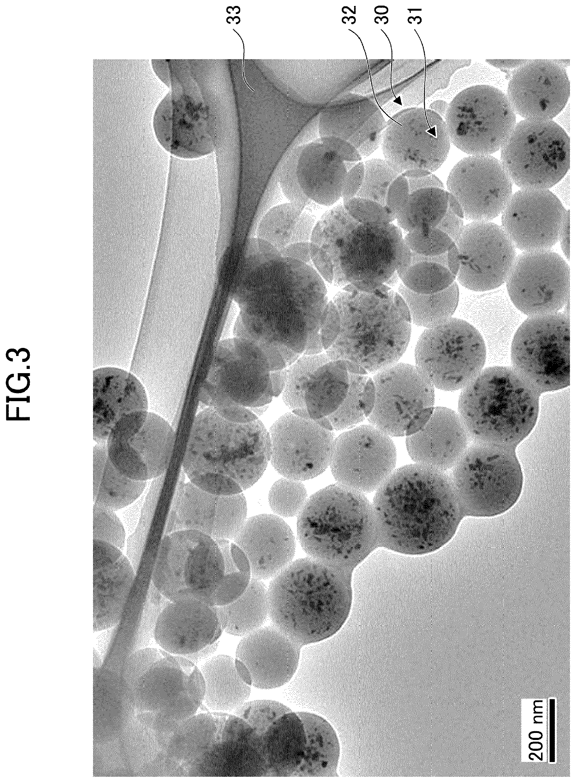

   FIG. 3 is a TEM image of organic-inorganic hybrid infrared absorbing particles obtained in Example 1.
[FIG. 4A]

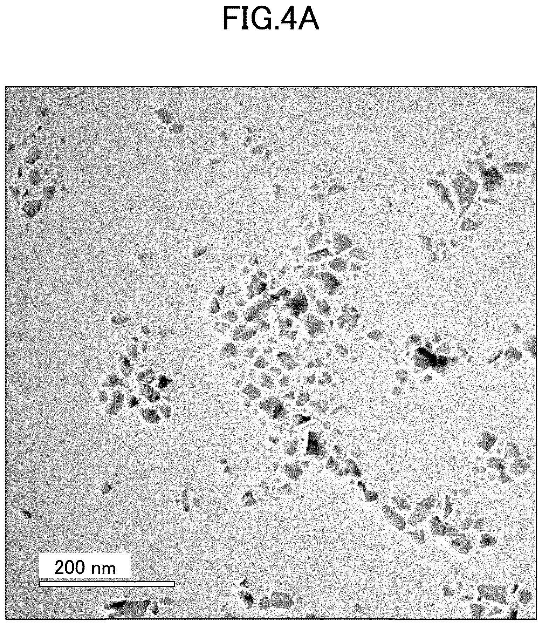

   FIG. 4A is a TEM image of a product obtained in Comparative Example 2.
[FIG. 4B]

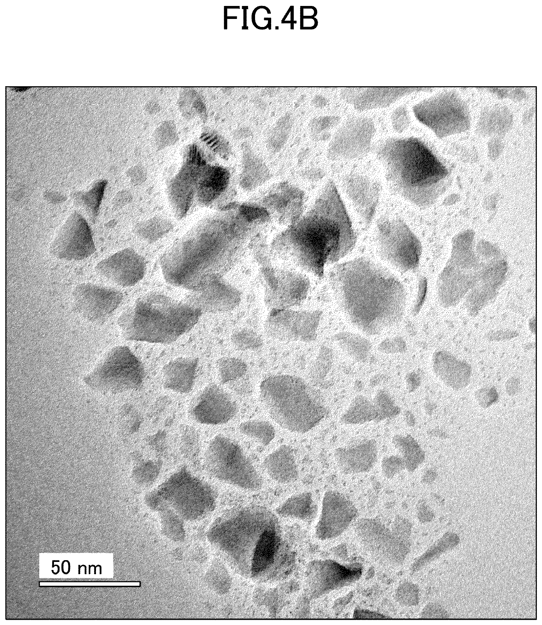

   FIG. 4B is a TEM image of a product obtained in Comparative Example 2.
[FIG. 5]

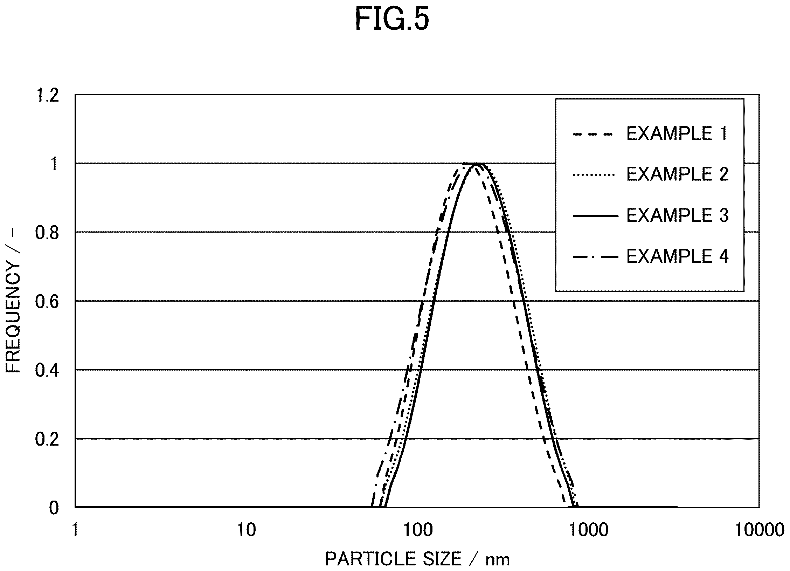

   FIG. 5 is a particle size distribution of organic-inorganic hybrid infrared absorbing particles obtained in Examples 1 to 4.
[FIG. 6]

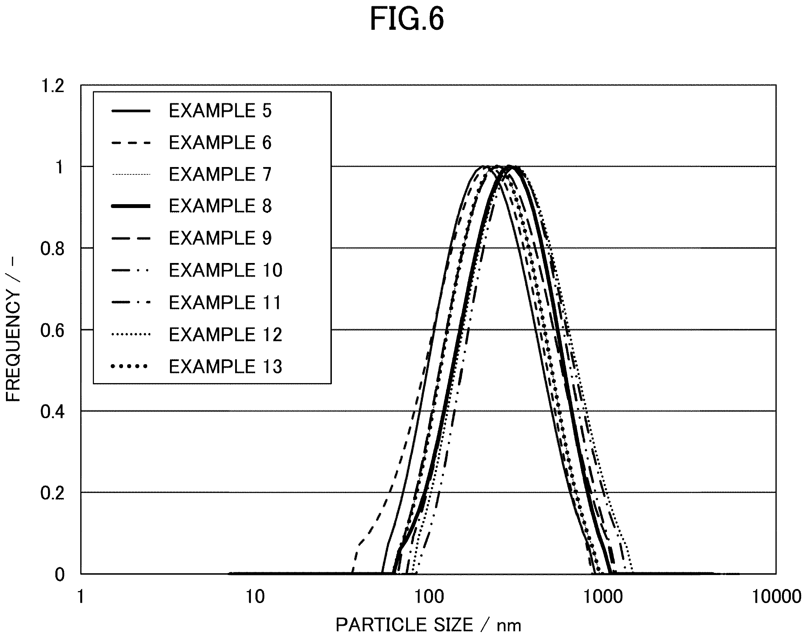

   FIG. 6 is a particle size distribution of organic-inorganic hybrid infrared absorbing particles obtained in Examples 5 to 13.
[FIG. 7]

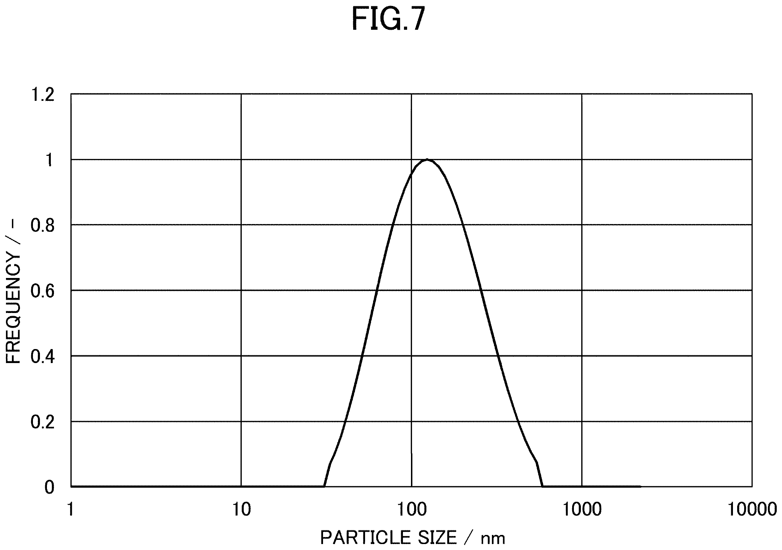

   FIG. 7 is a particle size distribution of organic-inorganic hybrid infrared absorbing particles obtained in Comparative Example 1.
[FIG. 8]

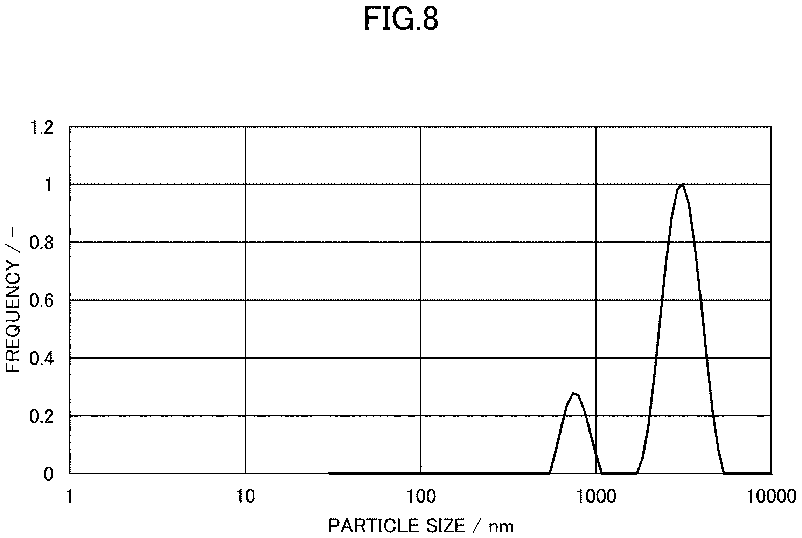

   FIG. 8 is a particle size distribution of a product obtained in Comparative Example 2.
[FIG. 9]

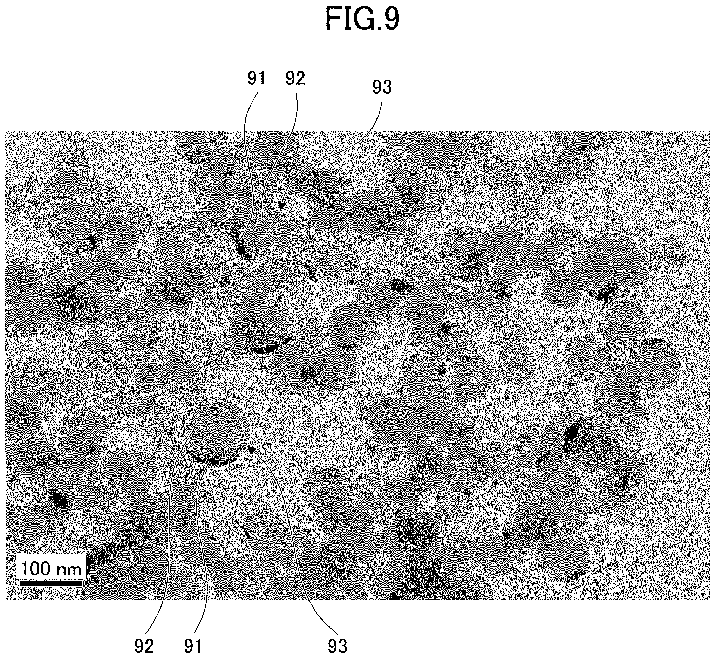

   FIG. 9 is a TEM image of organic-inorganic hybrid infrared absorbing particles obtained in Reference Example 1.
[FIG. 10]

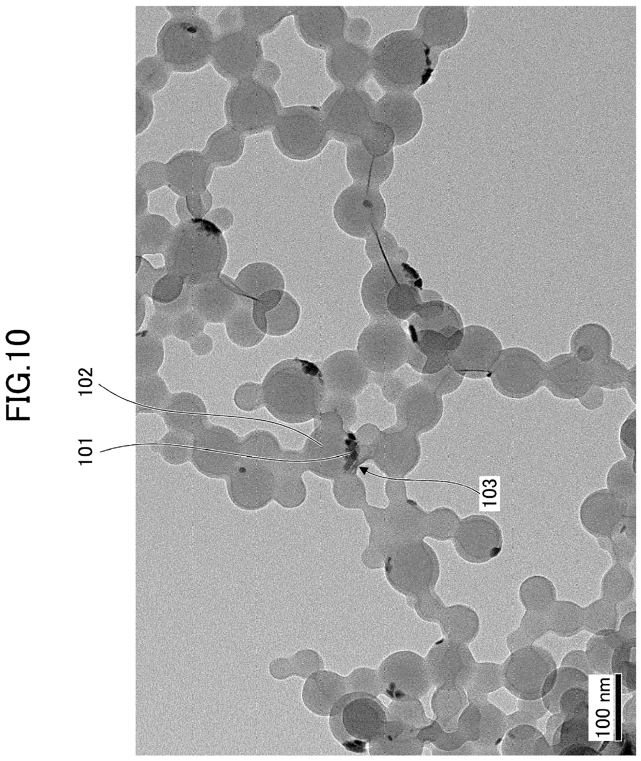

   FIG. 10 is a TEM image of organic-inorganic hybrid infrared absorbing particles obtained in Reference Example 2.
[FIG. 11]

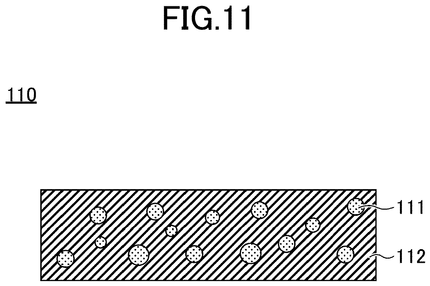

   FIG. 11 is a schematic diagram of an infrared absorbing particle dispersion.

### Description of Embodiments

Hereinafter, the embodiments for carrying out the invention will be described with reference to the drawings, but the invention is not limited to the following embodiments, and various modifications and substitutions can be made to the following embodiments without departing from the scope of the invention.

### [Organic-Inorganic Hybrid Infrared Absorbing Particles]

The organic-inorganic hybrid infrared absorbing particles of the present embodiment may include a resin capsule and an infrared absorbing particle placed in the resin capsule.

The content of the infrared absorbing particles may be 15 mass% or more and 55 mass% or less.

The inventors of the present invention have investigated an infrared absorbing material having excellent chemical resistance and infrared absorbing characteristics.

The infrared absorbing particles are usually inorganic materials, and it has been difficult to place an organic material such as resin on at least a part of the surface of the infrared absorbing particle. However, the inventors of the present invention examined and found that the organic-inorganic hybrid infrared absorbing particles can be obtained in which a resin is placed on the surface of infrared absorbing particles, and the infrared absorbing particles is placed at a high content in a resin capsule. By placing the infrared absorbing particles in the resin capsule, even when the organic-inorganic hybrid infrared absorbing particles are exposed to a chemical environment such as high temperature acid or alkali, the infrared absorbing particles inside the resin capsule can be prevented from directly contacting with a chemical component of the acid or alkali, thereby imparting a chemical resistance.

Furthermore, as described above, it has been difficult to place an organic material such as resin on the surface of the infrared absorbing particles, and in particular, no study has been made on increasing the content of the infrared absorbing particles. Meanwhile, the inventors of the present invention conducted further studies and found that by making the content of the infrared absorbing particles equal to or greater than a predetermined content in the organic-inorganic hybrid infrared absorbing particles, it is possible to produce an infrared shielding material compatible with the chemical resistance and the infrared shielding characteristics, thereby completing the present invention.

FIG. 1 illustrates a cross-sectional schematic view of an organic-inorganic hybrid infrared absorbing particle 10 of the present embodiment. As illustrated in FIG. 1, the organic-inorganic hybrid infrared absorbing particle 10 of the present embodiment may include a resin capsule 12 and infrared absorbing particles 11 placed in the resin capsule 12. As illustrated in FIG. 1, a plurality of infrared absorbing particles 11 may be placed in one resin capsule 12 or only one may be placed in the resin capsule 12 instead. The infrared absorbing particles 11 may be unevenly distributed in the resin capsule 12, but may preferably be dispersed.

The infrared absorbing particles 11 may be at least partially coated with the resin capsule 12. Some of the infrared absorbing particles 11 may be exposed to the outer surface on the resin capsule 12. It is preferable that the infrared absorbing particles 11 are completely coated with the resin capsule 12, that is, included in the resin capsule 12. This is because when the infrared absorbing particles 11 are completely coated with the resin capsule 12, even in a case where the organic-inorganic hybrid infrared absorbing particles come into contact with various chemical components, the infrared absorbing particles 11 can be more reliably prevented from coming into contact with the chemicals, and the chemical resistance can be particularly enhanced.

### (1) Components of Organic-Inorganic Hybrid Infrared Absorbing Particles

The components of the organic-inorganic hybrid infrared absorbing particles of the present embodiment will be described below.

### (1-1) Resin Capsule

The material of the resin capsule is not particularly limited, but the resin capsule may contain a resin component, for example. The resin component may be selected in accordance with the optical characteristics and the like required for the organic-inorganic hybrid infrared absorbing particles, but is not particularly limited. The resin capsule may contain, as the resin component, one or more resins selected from, for example, thermoplastic resin, thermosetting resin, photocurable resin, and the like.

The thermoplastic resin may be, for example, polyester resin, polycarbonate resin, acrylic resin, polystyrene resin, polyamide resin, vinyl chloride resin, olefin resin, fluororesin, polyvinyl acetate resin, thermoplastic polyurethane resin, acrylonitrile butadiene styrene resin, polyvinyl acetal resin, acrylonitrile/styrene copolymer resin, ethylene/vinyl acetate copolymer resin, and the like.

The thermosetting resin may be, for example, phenol resin, epoxy resin, melamine resin, urea resin, unsaturated polyester resin, alkyd resin, thermosetting polyurethane resin, polyimide resin, silicone resin, and the like.

The photocurable resin may be, for example, a resin that cures by irradiation with any of ultraviolet, visible, or infrared light, and the like.

The resin capsule preferably contains, as the resin component, one or more resins selected from, in particular, polyester resin, polycarbonate resin, acrylic resin, polystyrene resin, polyamide resin, vinyl chloride resin, olefin resin, fluororesin, polyvinyl acetate resin, polyurethane resin, acrylonitrile butadiene styrene resin, polyvinyl acetal resin, acrylonitrile/styrene copolymer resin, ethylene/vinyl acetate copolymer resin, phenol resin, epoxy resin, melamine resin, urea resin, unsaturated polyester resin, alkyd resin, polyimide resin, and silicone resin. As the polyurethane resin, any of thermoplastic polyurethane resin and thermosetting polyurethane resin may be used. The resin component contained in the resin capsule may also be composed of one or more resins selected from the resin group.

As the resin component, the photocurable resin may also be suitably used. As the photocurable resin, as described above, a resin that cures by irradiation with any of ultraviolet, visible, or infrared light may be suitably used. Therefore, the resin capsule may also contain the photocurable resin as the resin component. The photocurable resin preferably contains a resin that cures by irradiation with any of ultraviolet, visible, or infrared light. The resin component contained in the resin capsule may also be composed of the photocurable resin.

The resin capsule may be composed of only the resin component, but it may also contain, for example, an emulsifier added in the manufacturing process, a polymerization initiator, and the like.

### (1-2) Infrared Absorbing Particles

The infrared absorbing particles are not particularly limited, but various infrared absorbing particles that are required to have improved chemical resistance, for example, acid resistance and alkaline resistance, may be used. As the infrared absorbing particles, preferably, infrared absorbing particles that contains various materials containing free electrons are used, and more preferably, infrared absorbing particles that contains various inorganic materials containing free electrons are used, for example.

As the infrared absorbing particles, infrared absorbing particles containing one or more oxides selected from a tungsten oxide having oxygen deficiency and a composite tungsten oxide may be particularly preferably used. In this case, specifically, it is preferable that the infrared absorbing particles contain one or more oxides selected from, for example, a tungsten oxide represented by the general formula W_{y}O_{z} (W: tungsten, O: oxygen, 2.2≤z/y≤2.999) and a composite tungsten oxide represented by the general formula MₓW_{y}O_{z} (the element M is one or more elements selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Ti, Zr, Hf, V, Nb, Ta, Cr, Mo, Mn, Re, Fe, Ru, Os, Co, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Br, and I; 0.001≤x/y≤1; and 2.0≤z/y≤3.0).

Typically, it is known that materials containing free electrons exhibit a reflection absorption response to electromagnetic waves around the region of wavelength of 200 nm to 2600 nm of sunlight by by plasma vibration. Therefore, various materials containing free electrons can be suitably used as infrared absorbing particles. The infrared absorbing particles are preferably smaller than, for example, the wavelength of light. Accordingly, the geometric scattering in the visible light region (wavelength 380 nm to 780 nm) can be reduced, and particularly high transparency in the visible light region can be obtained.

In the present specification, the term "transparency" is used in the sense of "low scattering and high transmittance with respect to light in the visible light region".

Typically, because effective free electrons are not present in tungsten oxide (WO₃), the absorption reflection characteristics in the infrared region are low, and it is not effective as infrared absorbing particles.

In contrast, WO₃ having oxygen deficiency and the composite tungsten oxide in which positive elements such as Na are added to WO₃ are known to be conductive materials and materials with free electrons. Analysis of the single crystal of these materials having free electrons suggests a response of free electrons to light in the infrared region.

According to the inventors of the present invention, it is possible to obtain a tungsten oxide or a composite tungsten oxide having a particularly effective range as an infrared absorbing material in a specific part of the composition range of tungsten and oxygen, transparent in the visible light region, and having particularly strong absorption in the infrared region.

Therefore, the tungsten oxide and the composite tungsten oxide, which are a kind of materials for the infrared absorbing particles, will be further described below.

### (Tungsten Oxide)

The tungsten oxide is represented by the general formula W_{y}O_{z} (where W is tungsten, O is oxygen, and 2.2≤z/y≤2.999).

In the tungsten oxide represented by the general formula W_{y}O_{z}, the composition range of tungsten and oxygen is preferably less than 3 in the composition ratio (z/y) of oxygen to tungsten, and more preferably 2.2≤z/y≤2.999. In particular, it is further preferably 2.45≤z/y≤2.999.

When the value of z/y is 2.2 or more, the formation of a crystal phase of WO₂ in the tungsten oxide, which is undesirable, can be avoided, and chemical stability as a material can be achieved. Therefore, particularly effective infrared absorbing particles can be obtained.

Further, when the value of z/y is preferably less than 3 and more preferably 2.999 or less, a particularly sufficient amount of free electrons can be generated in order to enhance the absorption reflection characteristics in the infrared region, and efficient infrared absorbing particles can be obtained.

In addition, the oxides having a composition ratio represented by 2.45≤z/y≤2.999, the "Magnéli phases", are chemically stable and have excellent light absorption characteristics in the near-infrared region. Accordingly, the oxides can be more preferably used as the infrared absorbing material. Therefore, it is more preferable that the z/y satisfies 2.45≤z/y≤2.999, as described above.

### (Composite Tungsten Oxide)

The composite tungsten oxide is obtained by adding the element M, which will be described later, to the WO₃ described above.

By adding the element M to make the composite tungsten oxide, free electrons are generated in the WO₃, and strong absorption characteristics derived from the free electrons appear especially in the near-infrared region. Therefore, the composite tungsten oxide becomes effective as near-infrared absorbing particles around a wavelength of 1,000 nm.

That is, by making the composite tungsten oxide in which the oxygen amount is controlled and the element M that generates free electrons is added with respect to the WO₃, the infrared absorbing characteristics with higher efficiency can be exhibited. When the general formula of the composite tungsten oxide in which the oxygen amount is controlled and the element M that generates free electrons is added with respect to the WO₃ is described as MₓW_{y}O_{z}, it is preferable that the relations of 0.001≤x/y≤1 and 2.0≤z/y≤3.0 are satisfied. In the above general formula, M denotes the element M, W denotes tungsten, and O denotes oxygen.

As described above, when the value of x/y, which indicates the added amount of the element M, is 0.001 or more, a particularly sufficient amount of free electrons is generated in the composite tungsten oxide, and a high infrared absorbing effect can be obtained. The larger the added amount of the element M, the higher the supply amount of the free electrons and the higher the infrared absorbing efficiency, but the effect is also saturated at a value of x/y of about 1. When the value of x/y is 1 or less, it is preferable because the formation of an impurity phase in the infrared absorbing particle containing the composite tungsten oxide can be avoided.

The element M is preferably one or more elements selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Ti, Zr, Hf, V, Nb, Ta, Cr, Mo, Mn, Re, Fe, Ru, Os, Co, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Br, and I.

From the viewpoint of particularly enhancing the stability of MₓW_{y}O_{z}, the element M is more preferably one or more elements selected from Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Ti, Zr, V, Nb, Ta, Cr, Mo, Mn, Re, Fe, Ru, Co, Rh, Ir, Ni, Pd, Pt, Cu, Ag, Au, Zn, Cd, B, Al, Ga, In, Tl, Si, Ge, Sn, Pb, P, Sb, S, Se, Te, F, and Br. From the viewpoint of improving the optical characteristics and weathering resistance of the infrared absorbing particles containing the composite tungsten oxide, the element M is more preferably one or more elements selected from Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Ti, Zr, V, Nb, Ta, Cr, Mo, Mn, Re, Fe, Ru, Co, Rh, Ir, Ni, Pd, Pt, Cu, Ag, Au, Si, Ge, Sn, Pb, P, and Sb.

With regard to the value of z/y indicating the added amount of oxygen, the composite tungsten oxide represented by MₓW_{y}O_{z} has the same mechanism as the tungsten oxide represented by W_{y}O_{z} described above, and in addition, free electrons are supplied, even at z/y=3.0, by the added amount of the element M described above. Therefore, 2.0≤z/y≤3.0 is preferable, 2.2≤z/y≤3.0 is more preferable, and 2.45≤z/y≤3.0 is further preferable.

Further, when the composite tungsten oxide has a hexagonal crystal structure, the transmittance of light in the visible light region is improved and the absorption of light in the infrared region is improved for the infrared absorbing particles including the composite tungsten oxide. The description will be made with reference to FIG. 2, which is a schematic plan view of the hexagonal crystal structure.

FIG. 2 illustrates a projection view of the crystal structure of the composite tungsten oxide having the hexagonal crystal structure when viewed from the (001) direction, and a unit cell 20 is indicated by a dotted line.

In FIG. 2, six octahedra 21 formed of WO₆ units are assembled to form a hexagonal void 22, and an element 221, which is the element M, is placed in the void 22 to form a single unit, and a large number of these single units are assembled to form a hexagonal crystal structure.

In order to improve the transmittance of light in the visible light region and the absorption of light in the infrared region, the composite tungsten oxide only needs to contain the unit structure described with reference to FIG. 2, and the composite tungsten oxide may be crystalline or amorphous.

When a cation of the element M is added to the hexagonal void, the transmittance of light in the visible light region is improved and the absorption of light in the infrared region is improved. Typically, when element M having a large ionic radius is added, the hexagonal crystal is likely to be formed. Specifically, when one or more elements selected from Cs, K, Rb, Tl, In, Ba, Li, Ca, Sr, Fe, and Sn are added as the element M, the hexagonal crystal is likely to be formed. Of course, other elements can be used as long as the above-mentioned element M is present in the hexagonal void formed by the WO₆ units, and the elements that can be used are not limited to the above-mentioned elements.

Because the composite tungsten oxide having the hexagonal crystal structure has a uniform crystal structure, the added amount of the element M is preferably 0.2 or more and 0.5 or less in the value of x/y in the aforementioned general formula, and further preferably 0.33. When the value of x/y is 0.33, it is considered that the above-mentioned element M is placed in all of the hexagonal voids.

In addition, infrared absorbing particles including tetragonal and cubic composite tungsten oxides other than hexagonal composite tungsten oxides also have sufficiently effective infrared absorbing characteristics. Depending on the crystal structure, the absorption position in the infrared region tends to change, and the absorption position tends to move to the longer wavelength in the order of cubic<tetragonal<hexagonal. Correspondingly, the absorption of light in the visible region is less in the order of hexagonal, tetragonal, and cubic. Therefore, it is preferable to use hexagonal composite tungsten oxide for applications that transmit more light in the visible region and shield more light in the infrared region. However, the tendencies in optical characteristics described here are only rough tendencies and vary depending on the type of the added element, the added amount, and the oxygen amount, and the present invention is not limited thereto.

Because the infrared absorbing particles containing the tungsten oxide or the composite tungsten oxide largely absorb light in the near-infrared region, particularly around a wavelength of 1,000 nm, their transmitted color tone often ranges from blue to green.

The dispersion particle size of the infrared absorbing particles may be selected according to the purpose of their use.

First, in a case of use in applications where transparency is desired, the infrared absorbing particles preferably have the dispersion particle size of 800 nm or less. This is because particles with the dispersion particle size of 800 nm or less do not completely shield light due to scattering, maintain visibility in the visible light region, and at the same time can efficiently maintain transparency. In particular, when transparency in the visible light region is emphasized, it is preferable to further consider reducing the scattering by the particles.

When reducing the scattering by the particles is emphasized, the dispersion particle size is preferably 200 nm or less, and more preferably 100 nm or less. When the dispersion particle size of the particles is small, scattering of light in the visible light region having a wavelength of 400 nm or more and 780 nm or less due to geometric scattering or Mie scattering is reduced. As a result, it is possible to prevent the infrared absorbing film from becoming like frosted glass and not achieving clear transparency. That is, when the dispersion particle size is 200 nm or less, the geometric scattering or Mie scattering decreases and becomes a Rayleigh scattering region. In the Rayleigh scattering region, the scattered light is decreased in proportion to the sixth power of the particle size, so that the scattering is reduced and the transparency is improved with the decrease of the dispersion particle size.

Further, when the dispersion particle size is 100 nm or less, the scattered light is very small, which is preferable. From the viewpoint of avoiding the light scattering, the smaller the dispersion particle size is preferable.

Although the lower limit of the dispersion particle size of the infrared absorbing particles is not particularly limited, it is preferable that the dispersion particle size is 1 nm or more because the infrared absorbing particles can be easily manufactured industrially, for example.

By making the dispersion particle size of the infrared absorbing particle 800 nm or less, the infrared absorbing particle dispersion in which the infrared absorbing particles are dispersed in a medium can have a visible light transmittance of 85% or less and a haze of 30% or less. By making the haze of 30% or less, it is possible to prevent the infrared absorbing particle dispersion from becoming like frosted glass, and to achieve significantly clear transparency.

The dispersion particle size of the infrared absorbing particles can be measured using ELSZ-2000 manufactured by Otsuka Electronics Co., Ltd. and the like, based on the principle of dynamic light scattering.

Further, from the viewpoint of exhibiting excellent infrared absorbing characteristics, the crystallite diameter of the infrared absorbing particles is preferably 1 nm or more and 200 nm or less, more preferably 1 nm or more and 100 nm or less, and further preferably 10 nm or more and 70 nm or less. For the measurement of the crystallite diameter, X-ray diffraction pattern measurement by powder X-ray diffraction method (Θ-2Θ method) and analysis by Rietveld method may be used. The X-ray diffraction pattern measurement may be carried out using a powder X-ray diffractometer "X'Pert-PRO/MPD" manufactured by Malvern Panalytical Ltd., Spectris, and a powder X-ray diffractometer "D2 PHASER" manufactured by Bruker AXS Inc., for example.

### (2) Content of Infrared Absorbing Particles

According to the inventors of the present invention, the chemical resistance can be enhanced by using the organic-inorganic hybrid infrared absorbing particles, but in order to achieve particularly high infrared shielding characteristics, it is necessary to increase the content of the infrared absorbing particles.

Therefore, it is preferable that the content of the infrared absorbing particles in the organic-inorganic hybrid infrared absorbing particles of the present embodiment is 15 mass% or more, and more preferably 20 mass% or more.

However, when the content of the infrared absorbing particles is too high, many infrared absorbing particles may be exposed without being contained in the resin capsule. Therefore, the content of the infrared absorbing particles is preferably 55 mass% or less, and more preferably 50 mass% or less.

### (3) Particle Size Distribution of Organic-Inorganic Hybrid Infrared Absorbing Particles

According to the inventors of the present invention, it is preferable that the organic-inorganic hybrid infrared absorbing particles of the present embodiment have one peak in the particle size distribution based on the scattering intensity measured by a dynamic light scattering method. That is, it is preferable that the particle size distribution does not have two or more peaks. When the particle size distribution of the organic-inorganic hybrid infrared absorbing particles is represented by one peak in this manner, the infrared absorbing particle dispersion liquid or the infrared absorbing particle dispersion can be easily formed because of excellent dispersibility in various media such as a dispersion medium. In addition, the obtained infrared absorbing particle dispersion liquid or the infrared absorbing particle dispersion can be significantly enhanced in the infrared absorbing characteristics.

The organic-inorganic hybrid infrared absorbing particles of the present embodiment preferably have a median diameter D50 of 1 um or less and a standard deviation of 500 or less in the particle size distribution based on the scattering intensity measured by the dynamic light scattering method.

By setting the D50 to 1 um or less, it is possible to particularly enhance the dispersibility of the infrared absorbing particle dispersion liquid, the infrared absorbing particle dispersion, or the like, including the organic-inorganic hybrid infrared absorbing particles. Moreover, by setting the standard deviation to 500 or less, it is possible to particularly minimize the spread of the particle size distribution of the organic-inorganic hybrid infrared absorbing particle, and when using the infrared absorbing particle dispersion liquid, the infrared absorbing particle dispersion, or the like, the particles are easily dispersed uniformly in the infrared absorbing particle dispersion liquid or the infrared absorbing particle dispersion, and the infrared shielding characteristics can be particularly enhanced.

The D50 is more preferably 800 nm or less, and more preferably 500 nm or less. Although the lower limit of the D50 is not particularly limited, from the viewpoint of containing a sufficient amount of the infrared absorbing particles, it is more preferably 30 nm or more, more preferably 50 nm or more, and further preferably 100 nm or more.

The standard deviation is more preferably 400 or less, further preferably 300 or less, and particularly preferably 250 or less. The lower limit of the standard deviation is not particularly limited, but for example, it is preferably 20 or more, more preferably 50 or more, and further preferably 100 or more. By setting the standard deviation to 20 or more, the productivity of the organic-inorganic hybrid infrared absorbing particles can be increased.

### (4) Application

The application and usage of the organic-inorganic hybrid infrared absorbing particles of the present embodiment are not particularly limited, but they can be used in various applications where the chemical resistance and the infrared shielding characteristics are required. The organic-inorganic hybrid infrared absorbing particles can be used, for example, by being applied to a window, a building material, an outer wall of a building, or a material for agriculture, forestry, and fisheries, and the like. In the organic-inorganic hybrid infrared absorbing particles of the present embodiment, because the infrared absorbing particles are coated with the resin, it is difficult for water or the like to penetrate into the resin capsule, and alkali or acid components are not introduced by the water, so it is possible to minimize the deterioration of the infrared absorbing characteristics of the infrared absorbing particles. Furthermore, by incorporating the organic-inorganic hybrid infrared absorbing particles of the present embodiment into fibers such as clothing, structures such as outdoor windows and exterior walls of buildings, and materials for agriculture, forestry, and fisheries, the organic-inorganic hybrid infrared absorbing particles can also be utilized for infrared shielding by infrared absorption, photothermal conversion by infrared absorption, and the like.

### [Infrared Absorbing Particle Dispersion]

The infrared absorbing particle dispersion of the present embodiment may include a medium and the above-mentioned organic-inorganic hybrid infrared absorbing particles placed in the medium.

Specifically, for example, as illustrated schematically in FIG. 11, an infrared absorbing particle dispersion 110 may include above-mentioned organic-inorganic hybrid infrared absorbing particles 111 and a medium 112, and the organic-inorganic hybrid infrared absorbing particles 111 may be placed in the medium 112. Therefore, the infrared absorbing particle dispersion 110 may be an organic-inorganic hybrid infrared absorbing particle dispersion. The organic-inorganic hybrid infrared absorbing particles 111 are preferably dispersed in the medium 112.

FIG. 11 is a schematic view, and the infrared absorbing particle dispersion of the present embodiment is not limited to this embodiment. For example, in FIG. 11, the organic-inorganic hybrid infrared absorbing particles 111 are described as spherical particles, but the shape of the organic-inorganic hybrid infrared absorbing particles 111 is not limited to the embodiment and may have any shape. In addition, the boundary line between the organic-inorganic hybrid infrared absorbing particles 111 and the medium 112 may not be clear as illustrated in FIG. 11. The infrared absorbing particle dispersion 110 may contain other additives as necessary in addition to the organic-inorganic hybrid infrared absorbing particles 111 and the medium 112.

Although the medium of the infrared absorbing particle dispersion of the present embodiment is not particularly limited, it may be selected from UV-curable resin, thermosetting resin, electron-beam curable resin, room-temperature-curable resin, thermoplastic resin, and the like according to the purpose. Specifically, it may be selected from polyethylene resin, polyvinyl chloride resin, polyvinylidene chloride resin, polyvinyl alcohol resin, polystyrene resin, polypropylene resin, ethylenevinyl acetate copolymer resin, polyester resin, polyethylene terephthalate resin, fluororesin, polycarbonate resin, acrylic resin, and polyvinyl butyral resin. The resins may be used alone or in combination. Glass may also be used other than the resin.

In the infrared absorbing particle dispersion of the present embodiment, the organic-inorganic hybrid infrared absorbing particles are preferably dispersed in the medium.

The dispersion may be applied to any kind of base materials, for example. That is, the dispersion of the present embodiment may be used as a laminate having a base material and an infrared absorbing particle dispersion placed on the base material. The dispersion may be used alone or as the base material.

### [Method of Producing Organic-Inorganic Hybrid Infrared Absorbing Particles]

A configuration example of a method of producing the organic-inorganic hybrid infrared absorbing particles of the present embodiment will be described.

According to the method of producing the organic-inorganic hybrid infrared absorbing particles of the present embodiment, the aforementioned organic-inorganic hybrid infrared absorbing particles can be produced. Therefore, descriptions already explained are omitted.

The method of producing the organic-inorganic hybrid infrared absorbing particles of the present embodiment can have the following steps.

A dispersion liquid preparation step of preparing a dispersion liquid containing infrared absorbing particles, a dispersant, and a dispersion medium.

A dispersion medium reduction step of evaporating the dispersion medium from the dispersion liquid.

A raw material mixture preparation step of mixing the infrared absorbing particles collected after the dispersion medium reduction step, a coating resin material, an organic solvent, an emulsifier, water, and a polymerization initiator, to prepare a raw material mixture.

A stirring step of stirring the raw material mixture while cooling.

A polymerization step of performing, after a deoxygenation process to reduce oxygen amount in the raw material mixture, polymerization reaction of the coating resin material.

Each step will be described below.

### (1) Dispersion Liquid Preparation Step

In the dispersion liquid preparation step, a dispersion liquid containing infrared absorbing particles, a dispersant, and a dispersion medium may be prepared.

Each of the materials that can be suitably used in preparing the dispersion liquid in the dispersion liquid preparation step will be described below.

### (1-1) Infrared Absorbing Particles

As the infrared absorbing particles, various infrared absorbing particles that are required to have improved chemical resistance, for example, acid resistance and alkaline resistance, may be used. As the infrared absorbing particles used in the method of producing the organic-inorganic hybrid infrared absorbing particles of the present embodiment, for example, infrared absorbing particles containing various materials containing free electrons can be preferably used, and infrared absorbing particles containing various inorganic materials containing free electrons can be more preferably used.

As the infrared absorbing particles, infrared absorbing particles containing one or more oxides selected from tungsten oxide having oxygen deficiency and composite tungsten oxide can be particularly preferably used. In this case, it is preferable that the infrared absorbing particles contain one or more oxides selected from, for example, tungsten oxide represented by the general formula W_{y}O_{z} (W: tungsten, O: oxygen, 2.2≤z/y≤2.999) and composite tungsten oxide represented by the general formula MₓW_{y}O_{z} (the element M is one or more selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Ti, Zr, Hf, V, Nb, Ta, Cr, Mo, Mn, Re, Fe, Ru, Os, Co, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Br, and I; 0.001≤x/y≤1; and 2.0≤z/y≤3.0).

Because the details of the infrared absorbing particles have already been described, the description will be omitted here.

### (1-2) Dispersant

The dispersant is used for hydrophobizing the surface of the infrared absorbing particles. The dispersant may be selected according to the dispersion system, which is a combination of the infrared absorbing particles, the dispersion medium, the coating resin material, and the like. In particular, a dispersant having one or more groups selected from amino groups, hydroxyl groups, carboxyl groups, sulfo groups, phospho groups, and epoxy groups as functional groups can be suitably used. When the infrared absorbing particles are tungsten oxides or composite tungsten oxides, the dispersant more preferably has amino groups as the functional group.

More preferably, the dispersant has amino groups as the functional group as described above, that is, the dispersant is an amine compound. More preferably, the amine compound is a tertiary amine.

Because the dispersant is used for hydrophobizing the surface of the infrared absorbing particles, it is preferable to use a polymer material. For this reason, the dispersant preferably has one or more groups or rings selected from, for example, long-chain alkyl groups and benzene rings. As the dispersant, a polymer dispersant having a copolymer of styrene and 2-(dimethylamino) ethyl methacrylate, which is a tertiary amine, which can also be used for the coating resin material, as a side chain, or the like can be more preferably used. The long-chain alkyl group preferably has eight or more carbon atoms. For example, the dispersant may be a compound that is a polymer material and an amine compound.

The added amount of the dispersant is not particularly limited and can be freely selected. A suitable amount of the dispersant may be selected according to the type of the dispersant and the infrared absorbing particles and the specific surface area of the infrared absorbing particles. For example, it is preferable that the added amount of the dispersant is 10 parts by mass or more and 500 parts by mass or less for 100 parts by mass of the infrared absorbing particles, because it is particularly easy to prepare a dispersion liquid in a good dispersion state. The added amount of the dispersant is more preferably 10 parts by mass or more and 100 parts by mass or less for 100 parts by mass of the infrared absorbing particles, and further preferably 20 parts by mass or more and 50 parts by mass or less.

### (1-3) Dispersion Medium

The dispersion medium may be a dispersion medium in which the infrared absorbing particles and the dispersant described above are dispersed to form the dispersion liquid, and various organic compounds may be used, for example.

As the dispersion medium, one or more compounds selected from aromatic hydrocarbons such as toluene and xylene may be suitably used.

In the dispersion liquid preparation step, the dispersion liquid can be prepared by mixing the infrared absorbing particles, the dispersant, and the dispersion medium. In order to reduce the dispersion particle size of the infrared absorbing particles and to disperse them uniformly in the dispersion liquid, it is preferable to grind the infrared absorbing particles at the time of mixing.

The mixing means used in mixing and grinding the infrared absorbing particles, the dispersant, and the dispersion medium is not particularly limited, but one or more means selected from, for example, a bead mill, a ball mill, a sand mill, a paint shaker, an ultrasonic homogenizer, or the like may be used. In particular, a medium stirring mill such as a bead mill, a ball mill, a sand mill, a paint shaker, or the like using a medium such as a bead, a ball, or an Ottawa Sand is more preferably used as the mixing means. This is because, by using the medium stirring mill, it is possible to achieve a desired dispersion particle size for the infrared absorbing particles in a particularly short time, which is preferable from the viewpoint of productivity and reducing contamination with impurities.

### (2) Dispersion Medium Reduction Step

In the dispersion medium reduction step, the dispersion medium can be evaporated from the dispersion liquid and dried.

In the dispersion medium reduction step, it is preferable that the dispersion medium is sufficiently evaporated from the dispersion liquid to collect the infrared absorbing particles.

Although the specific means for evaporating the dispersion medium is not particularly limited, for example, a dryer such as an oven, a vacuum fluidizer such as an evaporator or a vacuum grinder, a spray dryer such as a spray dryer may be used.

The degree of evaporation of the dispersion medium is also not particularly limited, but it is preferable that the content of the dispersion medium can be sufficiently reduced so that, for example, powdered infrared absorbing particles can be obtained after the dispersion medium reduction step.

By evaporating the dispersion medium, it is possible to obtain the infrared absorbing particles in which the dispersant is placed around the infrared absorbing particles and the surface is hydrophobized. Therefore, the adhesion between the hydrophobized infrared absorbing particles and the coating resin polymerized by the coating resin material can be enhanced, and the infrared absorbing particles can be placed in the resin capsule in the polymerization step or the like described later.

### (3) Raw Material Mixture Preparation Step

In the raw material mixture preparation step, the infrared absorbing particles collected after the dispersion medium reduction step, a coating resin material, an organic solvent, an emulsifier, water, and a polymerization initiator are mixed to prepare a raw material mixture.

In some cases, the infrared absorbing particles collected after the dispersion medium reduction step may be dispersant-containing infrared absorbing particles in which the surface of the infrared absorbing particle is modified by adhesion of the dispersant that has been supplied in the dispersion liquid preparation step. Therefore, in the case where the dispersant is adhered to the infrared absorbing particles, the dispersant-containing infrared absorbing particles collected after the dispersion medium reduction step are used as the infrared absorbing particles in the raw material mixture preparation step.

Each of the materials used in the raw material mixture preparation step is described below.

### (3-1) Coating Resin Material

The coating resin material is polymerized in the polymerization step to be described later, and becomes the resin disposed on at least a part of the surface of the infrared absorbing particles, thereby constituting the resin capsule. Therefore, various monomers or the like capable of forming a desired resin by polymerization may be selected as the coating resin material.

The coating resin after the polymerization is not particularly limited, and may be one or more resins selected from, for example, thermoplastic resin, thermosetting resin, photocurable resin, or the like.

The thermoplastic resin may be, for example, polyester resin, polycarbonate resin, acrylic resin, polystyrene resin, polyamide resin, vinyl chloride resin, olefin resin, fluororesin, polyvinyl acetate resin, thermoplastic polyurethane resin, acrylonitrile butadiene styrene resin, polyvinyl acetal resin, acrylonitrile/styrene copolymer resin, ethylene/vinyl acetate copolymer resin, or the like.

The thermosetting resin may be, for example, phenol resin, epoxy resin, melamine resin, urea resin, unsaturated polyester resin, alkyd resin, thermosetting polyurethane resin, polyimide resin, silicone resin, or the like.

The photocurable resin may be, for example, a resin that cures by irradiation with any of ultraviolet, visible, or infrared light.

The coating resin preferably contains one or more resins selected from polyester resin, polycarbonate resin, acrylic resin, polystyrene resin, polyamide resin, vinyl chloride resin, olefin resin, fluororesin, polyvinyl acetate resin, polyurethane resin, acrylonitrile butadiene styrene resin, polyvinyl acetal resin, acrylonitrile/styrene copolymer resin, ethylene/vinyl acetate copolymer resin, phenol resin, epoxy resin, melamine resin, urea resin, unsaturated polyester resin, alkyd resin, polyimide resin, and silicone resin. Any of thermoplastic polyurethane and thermosetting polyurethane may be used as the polyurethane resin.

Also, as the coating resin, the photocurable resin may be suitably used, and as the photocurable resin, a resin that cures by irradiation with any of ultraviolet, visible, or infrared light may be suitably used.

In particular, as the coating resin, it is preferable to be a resin to which a mini-emulsion polymerization method can be applied, and more preferably to contain, for example, a polystyrene resin. When the coating resin is polystyrene, styrene may be used as the coating resin material.

As the crosslinking agent, a polyfunctional vinyl monomer such as divinylbenzene or ethylene glycol dimethacrylate may also be added together with the coating resin material.

### (3-2) Organic Solvent

The organic solvent has an effect of stabilizing oil droplets and may be referred to as a stabilizer, additive, and the like. The organic solvent is also not particularly limited, and may be any water-insoluble solvent but is not particularly limited. In particular, it is preferable that the organic solvent has a low molecular weight, and for example, the organic solvent may be one or more compounds selected from long-chain alkyl compounds such as hexadecane; alkyl methacrylic acid esters having a long-chain alkyl moiety such as dodecyl methacrylate and stearyl methacrylate; higher alcohols such as cetyl alcohol; oils such as olive oil; and the like.

As the organic solvent, particularly, long-chain alkyl compounds are more preferable, and hexadecane is more preferable.

### (3-3) Emulsifier

The emulsifier, or surfactant, may be cationic, anionic, nonionic, and the like, but is not particularly limited.

Examples of the cationic emulsifier include alkylamine salts, quaternary ammonium salts, and the like.

Examples of the anionic emulsifier may include an acid salt, an ester salt, and the like.

Examples of the nonionic emulsifier may include various esters, various ethers, various ester ethers, alkanolamides, and the like.

As the emulsifier, one or more emulsifiers selected from the above-mentioned materials may be used, for example.

In particular, it is preferable to use cationic emulsifiers, that is, surfactants exhibiting cationic properties, from the viewpoint that the infrared absorbing particles form the organic-inorganic hybrid infrared absorbing particles particularly easily.

In particular, when the amine compound is used as the dispersant, it is preferable to use one or more cationic emulsifiers selected from dodecyltrimethylammonium chloride (DTAC), cetyltrimethylammonium chloride (CTAC), and the like as the emulsifiers.

When the amine compound is used as the dispersant, it may be difficult to form the organic-inorganic hybrid infrared absorbing particles when sodium dodecyl sulfate (SDS), an anionic emulsifier, is used. When preparing the raw material mixture, the emulsifier can be added to the water to be added together, for example, and added as an aqueous solution. In this case, it is preferable to add the emulsifier as the aqueous solution so that the concentration is adjusted to be 10 times or more and 1,000 times or less of the critical micelle concentration (CMC), more preferably 10 times or more and 500 times or less, further preferably 10 times or more and 300 times or less, particularly preferably 10 times or more and 150 times or less.

Further, according to an investigation by the inventors of the present invention, by adding a predetermined ratio of the emulsifier to the coating resin material to be added and sufficiently stirring according to the added amount of the emulsifier, the content of the infrared absorbing particles can be made to be 15 mass% or more in the obtained organic-inorganic hybrid infrared absorbing particles. That is, by selecting the addition ratio of the emulsifier to the coating resin material and the stirring condition, encapsulation by the resin can be carried out even when the content of the infrared absorbing particles is 15 mass% or more. However, these conditions vary according to the type of the emulsifier and the like, so it is preferable to carry out preliminary tests and select appropriate conditions.

### (3-4) Polymerization Initiator

As the polymerization initiator, one or more polymerization initiators selected from various polymerization initiators such as radical polymerization initiators and ionic polymerization initiators may be used, but are not particularly limited.

Examples of the radical polymerization initiator include an azo compound, a dihalogen, an organic peroxide, and the like. Examples include a redox initiator that is a combination of an oxidizing agent and a reducing agent such as hydrogen peroxide and an iron (II) salt, persulfate and sodium bisulfite, and the like.

Examples of the ionic polymerization initiator include a nucleophile such as n-butyl lithium, an electrophilic agent such as a protonic acid, a Lewis acid, a halogen molecule, a carbocation, and the like.

By using a cationic or a nonionic polymerization initiator as the radical polymerization initiator, the infrared absorbing particles can be efficiently coated. As the radical polymerization initiator, a cationic polymerization initiator may be more suitably used.

When the cationic polymerization initiator is used as the radical polymerization initiator, the surface of the infrared absorbing particles can be coated with the resin particularly uniformly in the obtained organic-inorganic hybrid infrared absorbing particles. It is considered that the above effect is based on the affinity between the polymer matrix generated by the polymerization and the infrared absorbing particles. When a cationic system, that is, the polymerization initiator exhibiting cationic properties, is used, it is considered that the affinity between the polymer matrix and the infrared absorbing particles is enhanced by the adsorption (grafting) of oligomers or polymers having cationic sites at their ends onto the surface of the infrared absorbing particles by electrostatic interaction. In contrast, when a nonionic system, that is, the polymerization initiator exhibiting nonionic properties, is used, it is considered that little electrostatic interaction occurs and the affinity between the polymer matrix and the infrared absorbing particles is relatively low. Therefore, it is considered that the infrared absorbing particles can be coated with the resin more uniformly when the cationic polymerization initiator is used than when the nonionic polymerization initiator is used.

According to the inventors of the present invention, the selection and combination of the emulsifier and the polymerization initiator may affect the uniformity of the resin covering the infrared absorbing particles when the infrared absorbing particles are coated. Specifically, according to the selection and combination of the emulsifier and the polymerization initiator, for example, the infrared absorbing particles may be uniformly coated, or the infrared absorbing particles may be unevenly coated. Therefore, it is preferable to select a combination of the emulsifier and the polymerization initiator in accordance with the characteristics required for the organic-inorganic hybrid infrared absorbing particles.

As the polymerization initiator, the radical polymerization initiator may be used as described above, and in this case, one or more initiators selected from the cationic polymerization initiator, the nonionic polymerization initiator, or the like can be suitably used.

Examples of the nonionic polymerization initiator include an oil-soluble nonionic polymerization initiator and a water-soluble nonionic polymerization initiator.

Examples of the oil-soluble nonionic polymerization initiator include 1,1'-azobis(cyclohexane-1-carbonitrile), 2,2'-azobis(2-methylbutyronitrile), 2,2'-azobis isobutyronitrile, 2,2'-azobis(2,4-dimethylvaleronitrile), 2,2'-azobis(4-methoxy-2,4-dimethylvaleronitrile), dimethyl 1,1'-azobis(1-cyclohexane carboxylate), dimethyl 2,2'-azobis(2-methylpropionate), 2,2'-azobis(N-butyl-2-methylpropionamide), 2,2'-azobis[N-(2-propenyl)-2-methylpropionamide], and the like.

Examples of the water-soluble nonionic polymerization initiator include 4,4'-azobis(4-cyanovaleric acid), 2,2'-azobis[2-methyl-N-(2-hydroxyethyl) propionamide], 2,2'-azobis[2-(2-imidazoline-2-yl)propane], and the like.

Examples of the cationic polymerization initiator include 2,2'-azobis-(2-(1,3-dimethyl-4,5-dihydro-1H-imidazole-3-ium-2-yl)) propane triphthalate (ADIP), which constantly exhibit stable cationic properties independent of pH, and ADIP-Cl obtained by exchanging its counter anion with chloride ion; 2,2'-azobis(2-methylpropionamidine) dihydrochloride, 2,2'-azobis[2-(2-imidazoline-2-yl) propane]dihydrochloride, 2,2'-azobis[2-(2-imidazoline-2-yl)propane]disulfate dihydrate, and 2,2'-azobis[N-(2-carboxyethyl)-2 methylpropionamidine] tetrahydrate, which protonate in the acidic to neutral region in an aquatic environment and exhibit cationic properties; and the like.

When preparing the raw material mixture, the polymerization initiator may be added to the organic phase or the aqueous phase depending on the type or the polymerization initiator. For example, when 2,2'-azobisisobutyronitrile is used, the polymerization initiator may be added to the organic phase, and when 2,2'-azobis(2-methylpropionamidine) dihydrochloride is used, the polymerization initiator may be added to the aqueous phase.

In the raw material mixture preparation step, it is sufficient to prepare the raw material mixture by mixing the infrared absorbing particles collected after the dispersion medium reduction step, the coating resin material, the organic solvent, the emulsifier, water, and the polymerization initiator. Therefore, the preparation procedure of the raw material mixture is not particularly limited, but, for example, a mixture containing the emulsifier can be prepared in advance as the aqueous phase. In addition, as the organic phase, a mixture obtained by dispersing the coating resin material and the infrared absorbing particles collected after the dispersion medium reduction step in the organic solvent can be prepared.

The polymerization initiator may be added to the aqueous phase or to the organic phase according to the type of the polymerization initiator used as described above.

By adding and mixing the organic phase to the aqueous phase, the raw material mixture can be prepared.

In the raw material mixture preparation step, it is preferable to prepare the raw material mixture by mixing the raw material so that the content of the infrared absorbing particles is 15 mass% or more and 55 mass% or less, with regard to the obtained organic-inorganic hybrid infrared absorbing particles.

It is preferable that the organic phase is added to the aqueous phase and then stirred sufficiently so that the coating resin can be uniformly placed on the surface of the infrared absorbing particles. That is, it is preferable that the raw material mixture preparation step includes a mixing step of mixing the infrared absorbing particles collected after the dispersion medium reduction step, the coating resin material, the organic solvent, the emulsifier, water, and the polymerization initiator; and a stirring step of stirring the obtained mixture.

In the stirring step, stirring may be performed using a stirrer, for example. When the stirring step is performed, the degree of stirring is not particularly limited, but it is preferable to perform stirring so that, for example, an oil-in-water droplet is formed in which the infrared absorbing particles contained in the coating resin material are dispersed in the aqueous phase.

The added amount of the polymerization initiator is not particularly limited and can be freely selected. The added amount of the polymerization initiator may be selected according to the type of the coating resin material or the polymerization initiator, the size of oil droplets as a mini-emulsion, the ratio of the coating resin material to the infrared absorbing particles, and the like. For example, when the added amount of the polymerization initiator is 0.01 mol% or more and 1,000 mol% or less of the coating resin material, it is preferable because it is easy to obtain organic-inorganic hybrid infrared absorbing particles in which the infrared absorbing particles are sufficiently coated with the coating resin. The added amount of the polymerization initiator is more preferably 0.1 mol% or more and 200 mol% or less of the coating resin material, and further preferably 0.2 mol% or more and 100 mol% or less.

### (4) Stirring Step

In the stirring step, the raw material mixture obtained in the raw material mixture preparation step may be stirred while cooling.

The degree of stirring in the stirring step is not particularly limited and can be freely selected. For example, it is preferable to stir so that the size of the oil-in-water droplet, which is an O/W type emulsion in which the coating resin material encapsulating the infrared absorbing particles is dispersed in the aqueous phase, is a mini-emulsion of a predetermined size.

The mini-emulsion is obtained by adding a substance that is almost insoluble in water, that is, a hydrophobic substance, to the organic phase and applying a strong shear force. Examples of the hydrophobic substance include the organic solvent in the raw material mixture preparation step, as described above.

In the stirring step, the obtained mini-emulsion is preferably stirred so as to have particle size characteristics corresponding to the target organic-inorganic hybrid infrared absorbing particles.

In the stirring step, specifically, it is preferable to stir so that the mini-emulsion has one peak in the particle size distribution based on the scattering intensity measured by the dynamic light scattering method, for example. That is, in the stirring step, it is preferable that the particle size distribution of the obtained mini-emulsion does not have two or more peaks. When the particle size distribution of the mini-emulsion obtained in the stirring step is represented by a single peak, an infrared absorbing particle dispersion liquid or an infrared absorbing particle dispersion can be easily formed because the organic-inorganic hybrid infrared absorbing particles produced using the mini-emulsion have excellent dispersibility in various media such as the dispersion medium. In addition, the infrared absorbing characteristics of the infrared absorbing particle dispersion liquid and the infrared absorbing particle dispersion obtained can be particularly enhanced.

The mini-emulsion obtained in the stirring step preferably has a median diameter D50 of 1 um or less and a standard deviation of 500 or less in the particle size distribution based on the scattering intensity measured by the dynamic light scattering method.

By setting the D50 to 1 um or less, the dispersibility can be particularly enhanced when the organic-inorganic hybrid infrared absorbing particles produced using the mini-emulsion are used to prepare the infrared absorbing particle dispersion liquid, the infrared absorbing particle dispersion, or the like. By setting the standard deviation to 500 or less, it is possible to particularly minimize the spread of the particle size distribution of the organic-inorganic hybrid infrared absorbing particles produced using the mini-emulsion. Therefore, when the organic-inorganic hybrid infrared absorbing particles are used to prepare the infrared absorbing particle dispersion liquid, the infrared absorbing particle dispersion, or the like, the organic-inorganic hybrid infrared absorbing particles are easy to disperse uniformly into the infrared absorbing particle dispersion liquid or into the infrared absorbing particle dispersion, and the infrared absorbing characteristics can be significantly enhanced.

The D50 is more preferably 800 nm or less, and further preferably 500 nm or less. Although the lower limit of the D50 is not particularly limited, from the viewpoint of containing a sufficient amount of the infrared absorbing particles, it is preferably 30 nm or more, more preferably 50 nm or more, further preferably 100 nm or more, and particularly preferably 150 nm or more.

The standard deviation is more preferably 400 or less, further preferably 300 or less, and particularly preferably 250 or less. The lower limit of the standard deviation is not particularly limited, but is preferably, for example, 20 or more, more preferably 50 or more, and further preferably 100 or more. By setting the standard deviation to 20 or more, the productivity of the mini-emulsion can be enhanced.

In the stirring step, specific conditions for making the mini-emulsion having the particle size characteristics are not particularly limited. For example, in accordance with the type, the added amount, and the like of the emulsifier, conditions of the stirring tank such as the volume and the presence or absence of baffle boards, and the stirring conditions such as the stirring power and the type of stirring means to be used, may be selected so that an appropriate stirring force can be applied to the raw material mixture. The stirring step may be carried out in a plurality of steps while changing the stirring conditions. In addition, it is preferable to carry out a preliminary test and select an appropriate condition for the stirring step.

In the stirring step, it is preferable to carry out stirring while cooling the raw material mixture as described above. This is because by cooling the raw material mixture, the mini-emulsion can be formed while preventing a polymerization reaction from proceeding.

The degree of cooling of the raw material mixture is not particularly limited, but it is preferable to use a refrigerant of 0°C or lower, for example, in an ice bath.

### (5) Polymerization Step

In the polymerization step, a polymerization reaction of the coating resin material may be carried out after a deoxygenation process to reduce the oxygen amount in the raw material mixture.

In the polymerization step, the coating resin material is polymerized, and the coating resin can be placed on at least a part of the surface of the infrared absorbing particles. That is, by the polymerization step, the organic-inorganic hybrid infrared absorbing particles in which the infrared absorbing particles are placed in the resin capsule can be obtained.

Although the conditions in the polymerization step are not particularly limited, it is possible to perform the deoxygenation process to reduce the oxygen amount in the raw material mixture before starting the polymerization. Specific methods of the deoxygenation process are not particularly limited, but include a method of performing ultrasonic irradiation and a method of blowing an inert gas into the raw material mixture.

The specific conditions for carrying out the polymerization reaction can be freely selected according to the coating resin material or the like added to the raw material mixture, and is not particularly limited. The polymerization reaction may be progressed by, for example, heating the raw material mixture or irradiating the raw material mixture with light of a predetermined wavelength.

According to the method of producing the organic-inorganic hybrid infrared absorbing particles of the present embodiment described above, it is possible to place an organic material such as a resin on at least a part of the surface of the infrared absorbing particles and obtain the organic-inorganic hybrid infrared absorbing particles, which is difficult in the past. Therefore, even when exposed to a chemical environment such as high temperature acid or alkali, it is possible to prevent the contact of the infrared absorbing particles directly with a chemical component of the acid or alkali. Accordingly, the organic-inorganic hybrid infrared absorbing particles having excellent chemical resistance can be provided while minimizing the deterioration of the infrared absorbing characteristics.

In addition, according to the method of producing the organic-inorganic hybrid infrared absorbing particles according to the present embodiment, it is possible to produce the organic-inorganic hybrid infrared absorbing particles having a high content of the infrared absorbing particles of 15 mass% or more, which is particularly difficult in the past. Therefore, it is possible to obtain the organic-inorganic hybrid infrared absorbing particles having excellent infrared shielding characteristics in addition to chemical resistance.

### [Example]

Hereinafter, the present invention will be described in detail with reference to Examples. However, the present invention is not limited to the following Examples.

### [Example 1]

### (1) Preparation of Organic-Inorganic Hybrid Infrared Absorbing Particles

Organic-inorganic hybrid infrared absorbing particles were produced by the following procedure and evaluated.

### (Dispersion Liquid Preparation Step)

In the dispersion liquid preparation step, a dispersion liquid containing the infrared absorbing particles, the dispersant, and the dispersion medium was prepared.

As the infrared absorbing particles, a composite tungsten oxide powder (YM-01, manufactured by Sumitomo Metal Mining Co., Ltd.) containing hexagonal cesium tungsten bronze (Cs_{0.33}WO_{z}, 2.0≤z≤3.0), in which the ratio of the mole number of cesium (Cs) to tungsten (W) was Cs/W=0.33, was prepared.

As the dispersant, a polymer dispersant, which is a copolymer of styrene and 2-(dimethylamino) ethyl methacrylate, was prepared.

As the dispersion medium, toluene was prepared.

Then, a mixture obtained by mixing 20 mass% of the infrared absorbing particles, 6 mass% of the dispersant, and 74 mass% of the dispersion medium was loaded into a paint shaker containing 0.3 mmϕ ZrO₂ beads, and the mixture was ground and dispersed for 24 hours. As a result, a dispersion liquid of Cs_{0.33}WO_{z} particles according to Example 1 was obtained.

### (Dispersion Medium Reduction Step)

Toluene of the dispersion medium was removed from the dispersion liquid of the Cs_{0.33}WO_{z} particles obtained in the dispersion liquid preparation step using an evaporator, and infrared absorbing particles were collected. The collected infrared absorbing particles is dry powder of the Cs_{0.33}WO_{z} particles containing a polymer dispersant. That is, the collected infrared absorbing particles are dispersant-containing infrared absorbing particles due to adhesion of the dispersant supplied in the dispersion liquid preparation step to the surface of the particles.

The crystallite diameter of the collected infrared absorbing particles, that is, the Cs_{0.33}WO_{z} particles, was measured to be 16 nm.

When calculating the crystallite diameter, the X-ray diffraction pattern was first measured by the powder X-ray diffraction method (Θ-2Θ method) using a powder X-ray diffractometer (D2 PHASER manufactured by Bruker AXS Co., Ltd.). The crystal structure of the crystal contained in the infrared absorbing particles was identified from the obtained X-ray diffraction pattern, and the crystallite diameter was calculated using the Rietveld method.

### (Raw Material Mixture Preparation Step)

An organic phase was prepared by mixing 12.9 g of the infrared-absorbing particles in which the surface is modified with the dispersant obtained in the dispersion medium reduction step and 30 g of styrene as the coating resin material. In the present example, the infrared-absorbing particles and other components were added and mixed such that the content (target ratio) of the infrared-absorbing particles in the final organic-inorganic hybrid infrared-absorbing particles was 20 mass%.

In order to disperse the infrared-absorbing particles in which the surface is modified with the dispersant into styrene, the above organic phase was mixed and dispersed.

Then, 2.09 g of hexadecane as the organic solvent was added to the organic phase and further dispersed.

Separately from the organic phase, an aqueous phase was formed by mixing 3 g of cetyltrimethylammonium chloride as the emulsifier, 300 g of water, and 1.56 g of 2,2'-azobis(2-methylpropionamidine) dihydrochloride as the polymerization initiator. When the aqueous phase was formed, cetyltrimethylammonium chloride as the emulsifier was added to the water such that the concentration was 24 times the critical micelle concentration. The polymerization initiator was added so as to be 2.0 mol% of styrene.

Then, a raw material mixture was prepared by adding the organic phase to the aqueous phase. The added amounts of the components in the raw material mixture preparation step are summarized in Table 1.

### (Stirring Step)

The raw material mixture prepared in the raw material mixture preparation step was stirred under an ice bath until it has a single peak in the particle size distribution based on the scattering intensity measured by the dynamic light scattering method of the obtained emulsion. In this case, the D50 was 188 nm and the standard deviation was 119 in the particle size distribution.

After the stirring step, the raw material mixture was subjected to nitrogen bubbling under the ice bath for 15 minutes to perform a deoxygenation process.

Thereafter, the polymerization reaction of styrene was carried out by heating at 70°C for 15 hours under a nitrogen atmosphere to obtain an organic-inorganic hybrid infrared absorbing particle dispersion liquid.

### (2) Evaluation

### (TEM Observation)

The obtained dispersion liquid containing the organic-inorganic hybrid infrared absorbing particles was diluted and transferred to a microgrid for TEM observation, and the transferred material was observed by TEM. The TEM image is illustrated in FIG. 3. From the TEM image, it was confirmed that the particles containing composite tungsten oxide, which appeared in black, as infrared absorbing particles 31, were encapsulated in a coating of polystyrene, which appeared in gray, as a resin capsule 32, to form an organic-inorganic hybrid infrared absorbing particle 30. Although a microgrid 33 is also illustrated in FIG. 3, it does not constitute the organic-inorganic hybrid infrared absorbing particles.

### (Evaluation of Particle Size Characteristics)

A particle size measurement device (ELSZ-2000 manufactured by Otsuka Electronics Co., Ltd.) based on the dynamic light scattering method was used to measure the particle size distribution based on the scattering intensity of the obtained organic-inorganic hybrid infrared absorbing particles. The obtained particle size distribution is illustrated in FIG. 5. It is clear from FIG. 5 that the obtained particle size distribution of the organic-inorganic hybrid infrared absorbing particles has one peak. The median diameter D50 and the standard deviation were calculated from the obtained particle size distribution. The evaluation results are presented in Table 2.

### (Evaluation of Optical Characteristics)

The organic-inorganic hybrid infrared absorbing particles and a sheet-fed offset ink (Best One medium, manufactured by T&K TOKA Co., Ltd.) were mixed at a mass ratio of 1:30 and dispersed in a planetary centrifugal mixer, and the obtained ink was printed on a printing paper.

When the optical characteristics of the printed film were measured, the reflectance of light at a wavelength of 550 nm in the visible light region was 62%, the reflectance of light at a wavelength of 1,000 nm in the near-infrared region was 47%, and the reflectance of light at a wavelength of 1,300 nm was 45%. The evaluation results are presented in Table 2.

Note that the larger the reflectance at the predetermined wavelength, the smaller the absorption at the wavelength, and the smaller the reflectance at the predetermined wavelength, the larger the absorption at the wavelength. Therefore, it is confirmed that the organic-inorganic hybrid infrared absorbing particles of Example 1 have excellent absorption characteristics of light having a wavelength of 1,000 nm and a wavelength of 1,300 nm compared with that of Comparative Example 1 and the like, which will be described later.

The optical characteristics of the printed film of the organic-inorganic hybrid infrared absorbing particles were measured by the reflection method using a spectrophotometer (U-4100 manufactured by Hitachi, Ltd.). A white plate (aluminum oxide) supplied with the device was used as the baseline for the reflectance.

### (Chemical Resistance Test)

The obtained printed film was immersed in a 0.01 mol/l sodium hydroxide solution held at 80°C and stirred for 30 minutes to perform an alkaline resistance test. When the optical characteristics of the printed film after the alkaline resistance test were measured, the difference in the reflectance of light at a wavelength of 1,000 nm was 0.5%, which was almost unchanged, confirming that the infrared absorbing characteristics were maintained.

### (Content of Infrared Absorbing Particles)

TGA (thermogravimetry) was performed, and the resin component was removed by raising the temperature until the weight loss stopped, and the mass of the infrared absorbing particles in the obtained organic-inorganic hybrid infrared absorbing particles was measured. Then, the content of the measured infrared absorbing particles in the organic-inorganic hybrid infrared absorbing particles subjected to the evaluation was calculated, and it was confirmed that it was 20 mass%, which was the target content. In other Examples and Comparative Examples below, the content of the infrared absorbing particles in the organic-inorganic hybrid infrared absorbing particles was analyzed in the same manner, and it was confirmed that the target composition was achieved.

The evaluation results are presented in Table 2.

### [Example 2]

In the raw material mixture preparation step, the organic phase was formed in the same manner as in Example 1 except that 23.4 g of the infrared absorbing particles in which the surface is modified with the dispersant obtained in the dispersion medium reduction step were mixed with 30 g of styrene as the coating resin material. In the present example, the infrared absorbing particles and other components were added and mixed such that the content (target ratio) of the infrared absorbing particles in the final organic-inorganic hybrid infrared absorbing particles was 30 mass%.

Except for the above points, the organic-inorganic hybrid infrared absorbing particles and the printed film of the organic-inorganic hybrid infrared absorbing particles according to Example 2 were produced and evaluated in the same manner as in Example 1.

In the stirring step, as in Example 1, the raw material mixture prepared in the raw material mixture preparation step was stirred under an ice bath until it has a single peak in the particle size distribution based on the scattering intensity measured by the dynamic light scattering method of the obtained emulsion. In this case, the D50 was 226 nm and the standard deviation was 141 in the particle size distribution of the emulsion.

The evaluation results are presented in Table 2.

The particle size distribution based on the scattering intensity of the obtained organic-inorganic hybrid infrared absorbing particles is illustrated in FIG. 5. It is clear from FIG. 5 that the obtained particle size distribution of the organic-inorganic hybrid infrared absorbing particles has one peak.

### [Example 3]

In the raw material mixture preparation step, the organic phase was formed in the same manner as in Example 1 except that 39.7 g of the infrared absorbing particles in which the surface is modified with the dispersant obtained in the dispersion medium reduction step were mixed with 30 g of styrene as the coating resin material. In the present example, the infrared absorbing particles and other components were added and mixed such that the content (target ratio) of the infrared absorbing particles in the final organic-inorganic hybrid infrared absorbing particles was 40 mass%.

Except for the above points, the organic-inorganic hybrid infrared absorbing particles and the printed film of the organic-inorganic hybrid infrared absorbing particles according to Example 3 were produced and evaluated in the same manner as in Example 1.

In the stirring step, the raw material mixture prepared in the raw material mixture preparation step was stirred under an ice bath until it has a single peak in the particle size distribution based on the scattering intensity measured by the dynamic light scattering method of the obtained emulsion. In this case, the D50 was 222 nm and the standard deviation was 134 in the particle size distribution of the emulsion.

The evaluation results are presented in Table 2.

The particle size distribution based on the scattering intensity of the obtained organic-inorganic hybrid infrared absorbing particles is illustrated in FIG. 5. It is clear from FIG. 5 that the obtained particle size distribution of the organic-inorganic hybrid infrared absorbing particles has one peak.

### [Example 4]

In the raw material mixture preparation step, the organic phase was formed in the same manner as in Example 1 except that 70.8 g of the infrared absorbing particles in which the surface is modified with the dispersant obtained in the dispersion medium reduction step were mixed with 30 g of styrene as the coating resin material. The aqueous phase was formed by mixing 4.49 g of cetyltrimethylammonium chloride as the emulsifier, 300 g of water, and 1.56 g of 2,2'-azobis(2-methylpropionamidine) dihydrochloride as the polymerization initiator. When the aqueous phase was formed, cetyltrimethylammonium chloride as the emulsifier was added to the water such that the concentration was 36 times the critical micelle concentration.

In the present example, the infrared absorbing particles and other components were added and mixed such that the content (target ratio) of the infrared absorbing particles in the final organic-inorganic hybrid infrared absorbing particles was 50 mass%.

Except for the above points, the organic-inorganic hybrid infrared absorbing particles and the printed film of the organic-inorganic hybrid infrared absorbing particles according to Example 4 were produced and evaluated in the same manner as in Example 1.

In the stirring step, the raw material mixture prepared in the raw material mixture preparation step was stirred under an ice bath until it reached a single peak in the particle size distribution based on the scattering intensity measured by the dynamic light scattering method of the obtained emulsion. In this case, the D50 was 217 nm and the standard deviation was 144 in the particle size distribution of the emulsion.

The evaluation results are presented in Table 2.

The particle size distribution based on the scattering intensity of the obtained organic-inorganic hybrid infrared absorbing particles is illustrated in FIG. 5. It is clear from FIG. 5 that the obtained particle size distribution of the organic-inorganic hybrid infrared absorbing particles has one peak.

### [Examples 5 to 12]

In the raw material mixture preparation step, when forming the organic phase and the aqueous phase, the addition ratio of the components was set to the value presented in Table 1.

In Examples 5 to 12, the infrared absorbing particles and other components were added and mixed such that the content (target ratio) of the infrared absorbing particles in the final organic-inorganic hybrid infrared absorbing particles was 30 mass%.

Except for the above points, the organic-inorganic hybrid infrared absorbing particles and the printed film of the organic-inorganic hybrid infrared absorbing particles according to Examples 5 to 12 were produced and evaluated in the same manner as in Example 1.

In the stirring step, the raw material mixture prepared in the raw material mixture preparation step was stirred under an ice bath until it has a single peak in the particle size distribution based on the scattering intensity measured by the dynamic light scattering method of the obtained emulsion. In this case, the D50 and the standard deviation of the above particle size distribution of the emulsion were the same as the evaluation results of the organic-inorganic hybrid infrared absorbing particles presented in Table 2 for each of the examples. That is, for example, in Example 5, the D50 was 203 nm and the standard deviation was 147.

The evaluation results are presented in Table 2.

The particle size distribution based on the scattering intensity for the obtained organic-inorganic hybrid infrared absorbing particles is illustrated in FIG. 6. It is clear from FIG. 6 that the obtained particle size distribution of the organic-inorganic hybrid infrared absorbing particles has one peak in all of the present examples.

### [Example 13]

In the raw material mixture preparation step, when forming the organic phase and the aqueous phase, the addition ratio of the components was set to the value presented in Table 1.

In the present example, the infrared absorbing particles and other components were added and mixed such that the content (target ratio) of the infrared absorbing particles in the final organic-inorganic hybrid infrared absorbing particles was 40 mass%.

Except for the above points, the organic-inorganic hybrid infrared absorbing particles and the printed film of the organic-inorganic hybrid infrared absorbing particle were produced and evaluated in the same manner as in Example 1.

In the stirring step, the raw material mixture prepared in the raw material mixture preparation step was stirred under an ice bath until it has a single peak in the particle size distribution based on the scattering intensity measured by the dynamic light scattering method of the obtained emulsion. In this case, the D50 was 235 nm and the standard deviation was 155 in the particle size distribution of the emulsion.

The evaluation results are presented in Table 2.

The particle size distribution based on the scattering intensity of the obtained organic-inorganic hybrid infrared absorbing particles is illustrated in FIG. 6. It is clear from FIG. 6 that the particle size distribution of the obtained organic-inorganic hybrid infrared absorbing particles has one peak.

### [Comparative Example 1]

In the raw material mixture preparation step, the organic phase was formed in the same manner as in Example 1 except that 5.5 g of the infrared absorbing particles in which the surface is modified with the dispersant obtained in the dispersion medium reduction step were mixed with 30 g of styrene as the coating resin material. In the present Comparative Example, the infrared absorbing particles and other components were added and mixed such that the content (target ratio) of the infrared absorbing particles in the final organic-inorganic hybrid infrared absorbing particles was 10 mass%.

Except for the above points, the organic-inorganic hybrid infrared absorbing particles and the printed film of the organic-inorganic hybrid infrared absorbing particles according to Comparative Example 1 were produced and evaluated in the same manner as in Example 1.

In the stirring step, as in Example 1, the raw material mixture prepared in the raw material mixture preparation step was stirred under an ice bath until it has a single peak in the particle size distribution based on the scattering intensity measured by the dynamic light scattering method of the obtained emulsion. In this case, the D50 was 124 nm and the standard deviation was 96 in the particle size distribution of the emulsion.

The evaluation results are presented in Table 2.

The particle size distribution of the obtained organic-inorganic hybrid infrared absorbing particles is illustrated in FIG. 7. As illustrated in FIG. 7, the particle size distribution of the obtained organic-inorganic hybrid infrared absorbing particles has one peak.

### [Comparative Example 2]

In the raw material mixture preparation step, the organic phase was formed in the same manner as in Example 1 except that 135.2 g of the infrared absorbing particles in which the surface is modified with the dispersant obtained in the dispersion medium reduction step were mixed with 30 g of styrene as the coating resin material. In the present Comparative Example, the infrared absorbing particles and other components were added and mixed such that the content (target ratio) of the infrared absorbing particles in the final organic-inorganic hybrid infrared absorbing particles was 60 mass%. When forming the aqueous phase, the addition ratio of the components was set to the value presented in Table 1.

Except for the above points, the organic-inorganic hybrid infrared absorbing particles and the printed film of the organic-inorganic hybrid infrared absorbing particles according to Comparative Example 2 were produced and evaluated in the same manner as in Example 1.

In the stirring step, the raw material mixture prepared in the raw material mixture preparation step was stirred continuously for a long time under an ice bath aiming to obtain a single peak in the particle size distribution based on the scattering intensity measured by the dynamic light scattering method of the obtained emulsion. However, two peaks remained in the particle size distribution based on the scattering intensity measured by the dynamic light scattering method, and the D50 did not decrease sufficiently.

The evaluation results are presented in Table 2.

FIG. 8 illustrates the particle size distribution of the obtained organic-inorganic hybrid infrared absorbing particles. As illustrated in FIG. 8, the particle size distribution of the obtained organic-inorganic hybrid infrared absorbing particles has two peaks.

TEM images of the obtained organic-inorganic hybrid infrared absorbing particles are illustrated in FIGS. 4A and 4B. As illustrated in FIGS. 4A and 4B, the infrared absorbing particles could not be placed in the resin capsule.

### [Reference Example 1]

Organic-inorganic hybrid infrared absorbing particles were produced by the following procedure and evaluated.

### (Dispersion Liquid Preparation Step)

In the dispersion liquid preparation step, a dispersion liquid containing the infrared absorbing particles, the dispersant, and the dispersion medium was prepared.

As the infrared absorbing particles, a composite tungsten oxide powder (YM-01 manufactured by Sumitomo Metal Mining Co., Ltd.) containing hexagonal cesium tungsten bronze (Cs_{0.33}WO_{z}, 2.0≤z≤3.0), in which the ratio of the mole number of cesium (Cs) to tungsten (W) was Cs/W=0.33, was prepared.

As the dispersant, a polymer dispersant, which is a copolymer of styrene and 2-(dimethylamino) ethyl methacrylate, was prepared.

As the dispersion medium, toluene was prepared.

Then, a mixture obtained by mixing 10 mass% of the infrared absorbing particles, 3 mass% of the dispersant, and 87 mass% of the dispersion medium was loaded into a paint shaker containing 0.3 mmϕ ZrO₂ beads, and the mixture was ground and dispersed for 10 hours to obtain a dispersion liquid of Cs_{0.33}WO_{z} particles according to Reference Example 1.

### (Dispersion Medium Reduction Step)

Toluene of the dispersion medium was removed from the dispersion liquid of the Cs_{0.33}WO_{z} particles obtained in the dispersion liquid preparation step using an evaporator, and infrared absorbing particles were collected. The collected infrared absorbing particles is dry powder of the Cs_{0.33}WO_{z} particles containing a polymer dispersant. That is, the collected infrared absorbing particles are dispersant-containing infrared absorbing particles due to adhesion of the dispersant supplied in the dispersion liquid preparation step to the surface of the particles.

The crystallite diameter of the collected infrared absorbing particles, that is, Cs_{0.33}WO_{z} particles, was measured to be 16 nm.

When calculating the crystallite diameter, the X-ray diffraction pattern was first measured by the powder X-ray diffraction method (θ-2θ method) using the powder X-ray diffractometer. The crystal structure of the crystal contained in the infrared absorbing particles was identified from the obtained X-ray diffraction pattern, and the crystallite diameter was calculated using the Rietveld method.

### (Raw Material Mixture Preparation Step)

An organic phase was formed by mixing 0.05 g of the infrared-absorbing particles in which the surface is modified with the dispersant obtained in the dispersion medium reduction step, 1.0 g of styrene as the coating resin material, 0.065 g of hexadecane as the organic solvent, and 0.0079 g of 2,2'-azobisisobutyronitrile as the polymerization initiator. The polymerization initiator was added so as to be 0.5 mol% of styrene.

Separately from the organic phase, 10 g of the aqueous phase was formed by mixing dodecyltrimethylammonium chloride as the emulsifier and water. When the aqueous phase was formed, dodecyltrimethylammonium chloride as the emulsifier was added to the water such that the concentration was 1.5 times the critical micelle concentration.

Then, a raw material mixture was prepared by adding the organic phase to the aqueous phase.

### (Stirring Step)

The raw material mixture prepared in the raw material mixture preparation step was irradiated with high-power ultrasonic waves for 15 minutes while cooling under an ice bath to obtain a mini-emulsion.

### (Polymerization Step)

After the stirring step, the raw material mixture was subjected to nitrogen bubbling under the ice bath for 15 minutes to perform a deoxygenation process.

Thereafter, the polymerization reaction of styrene was carried out at 70°C for 6 hours under a nitrogen atmosphere to obtain an organic-inorganic hybrid infrared absorbing particle dispersion liquid.

The obtained dispersion liquid containing organic-inorganic hybrid infrared absorbing particles was diluted and transferred to a microgrid for TEM observation, and the transferred material was observed by TEM. The TEM image is illustrated in FIG. 9. From the TEM image, it was confirmed that the particles containing composite tungsten oxide, which appeared in black, as infrared absorbing particles 91, were encapsulated in a coating of polystyrene, which appeared in gray, as a resin capsule 92, to form an organic-inorganic hybrid infrared absorbing particle 93.

### [Reference Example 2]

The organic-inorganic hybrid infrared absorbing particle dispersion liquid according to Reference Example 2 was obtained in the same manner as Reference Example 1, except that 2,2'-azobis[2-methyl-N-(2-hydroxyethyl) propionamide] was used instead of 2,2'-azobisisobutyronitrile as the polymerization initiator in a ratio equivalent to 0.5mol% of styrene.

The obtained dispersion liquid containing the organic-inorganic hybrid infrared absorbing particles was diluted and transferred to a microgrid for TEM observation, and the transferred material was observed by TEM. The TEM image is illustrated in FIG. 10. From the TEM image, it was confirmed that the particles containing composite tungsten oxide, as infrared absorbing particles 101, were encapsulated in a coating of polystyrene, as a resin capsule 102, to form an organic-inorganic hybrid infrared absorbing particle 103.

**[Table 1]**

| | CONTENT OF INFRARED ABSORBING PARTICLES (TARGET PERCENTAGE) | ORGANIC PHASE | | | AQUEOUS PHASE | | | MAGNIFICATION OF EMULSIFIER CONCENTRATION RELATIVE TO CRITICAL MICELLE CONCENTRATION |
|---|---|---|---|---|---|---|---|---|
| | | COATING RESIN MATERIAL | INFRARED ABSORBING PARTICLES THAT ARE SURFACE-MODIFIED WITH DISPERSANT | ORGANIC SOLVENT | WATER | EMULSIFIER | POLYMERIZATION INITIATOR | |
| | (MASS%) | (g) | (g) | (g) | (g) | (g) | (g) | (TIMES) |
| EXAMPLE 1 | 20 | 30 | 12.9 | 2.09 | 300 | 3.00 | 1.56 | 24 |
| EXAMPLE 2 | 30 | 30 | 23.4 | 2.09 | 300 | 3.00 | 1.56 | 24 |
| EXAMPLE 3 | 40 | 30 | 39.7 | 2.09 | 300 | 3.00 | 1.56 | 24 |
| EXAMPLE 4 | 50 | 30 | 70.8 | 2.09 | 300 | 4.49 | 1.56 | 36 |
| EXAMPLE 5 | 30 | 30 | 22.5 | 2.09 | 150 | 1.50 | 1.56 | 24 |
| EXAMPLE 6 | 30 | 30 | 22.9 | 2.09 | 150 | 2.25 | 1.56 | 36 |
| EXAMPLE 7 | 30 | 30 | 23.4 | 2.09 | 150 | 3.00 | 1.56 | 48 |
| EXAMPLE 8 | 30 | 30 | 23.9 | 2.09 | 150 | 3.74 | 1.56 | 60 |
| EXAMPLE 9 | 30 | 30 | 24.4 | 2.09 | 150 | 4.49 | 1.56 | 72 |
| EXAMPLE 10 | 30 | 30 | 23.4 | 2.09 | 100 | 3.00 | 1.56 | 72 |
| EXAMPLE 11 | 30 | 30 | 23.9 | 2.09 | 100 | 3.74 | 1.56 | 90 |
| EXAMPLE 12 | 30 | 30 | 24.4 | 2.09 | 100 | 4.49 | 1.56 | 108 |
| EXAMPLE 13 | 40 | 30 | 41.3 | 2.09 | 300 | 4.49 | 1.56 | 36 |
| COMPARATIVE EXAMPLE 1 | 10 | 30 | 5.5 | 2.09 | 300 | 3.00 | 1.56 | 24 |
| COMPARATIVE EXAMPLE 2 | 60 | 30 | 135.2 | 2.09 | 300 | 4.49 | 1.56 | 36 |

**[Table 2]**

| | ORGANIC-INORGANIC HYBRID INFRARED ABSORBING PARTICLES | | | REFLECTANCE BEFORE CHEMICAL RESISTANCE TEST | | | DIFFERENCE IN REFLECTANCE BEFORE AND AFTER CHEMICAL RESISTANCE TEST (WAVELENGTH 1000 nm) |
|---|---|---|---|---|---|---|---|
| | CONTENT OF INFRARED ABSORBING PARTICLES | D50 BASED ON SCATTERING INTENSITY | STANDARD DEVIATION | WAVELENGTH 550 nm | WAVELENGTH 1000 nm | WAVELENGTH 1300 nm | |
| | (MASS%) | (nm) | (-) | (%) | | | (%) |
| EXAMPLE 1 | 20 | 188 | 119 | 62 | 47 | 45 | 0.5 |
| EXAMPLE 2 | 30 | 226 | 141 | 52 | 34 | 33 | 0.4 |
| EXAMPLE 3 | 40 | 222 | 134 | 44 | 27 | 25 | 0.6 |
| EXAMPLE 4 | 50 | 217 | 144 | 35 | 15 | 16 | 0.7 |
| EXAMPLE 5 | 30 | 203 | 147 | 53 | 36 | 34 | 1.2 |
| EXAMPLE 6 | 30 | 217 | 149 | 55 | 32 | 34 | 0.7 |
| EXAMPLE 7 | 30 | 235 | 155 | 54 | 35 | 33 | 0.8 |
| EXAMPLE 8 | 30 | 288 | 182 | 54 | 33 | 34 | 1.2 |
| EXAMPLE 9 | 30 | 256 | 192 | 51 | 35 | 33 | 1.3 |
| EXAMPLE 10 | 30 | 306 | 198 | 50 | 34 | 34 | 0.5 |
| EXAMPLE 11 | 30 | 306 | 227 | 51 | 34 | 32 | 0.6 |
| EXAMPLE 12 | 30 | 319 | 241 | 51 | 35 | 34 | 1.3 |
| EXAMPLE 13 | 40 | 235 | 155 | 44 | 26 | 24 | 0.8 |
| COMPARATIVE EXAMPLE 1 | 10 | 124 | 96 | 82 | 62 | 58 | 0.5 |
| COMPARATIVE EXAMPLE 2 | 60 | 3140 | 1060 | - | - | - | - |

According to the results presented in Table 1, it was confirmed that the organic-inorganic hybrid infrared absorbing particles of Examples 1 to 13 had no significant change in the reflection characteristics of light with a wavelength of 1,000 nm before and after the immersion in the sodium hydroxide solution in the chemical resistance test. Therefore, it was confirmed that the organic-inorganic hybrid infrared absorbing particles of Examples 1 to 13 had excellent alkaline resistance, that is, chemical resistance. Although only the alkaline resistance test was performed here, these organic-inorganic hybrid infrared absorbing particles also have acid resistance because the infrared absorbing particles are placed in the resin capsule.

It was also confirmed that reflectances of light with, for example, wavelengths of 1,000 nm and 1,300 nm of the organic-inorganic hybrid infrared absorbing particles of Examples 1 to 13 are lower than those of the organic-inorganic hybrid infrared absorbing particles of Comparative Example 1 by 10% or more. This is considered to be because the organic-inorganic hybrid infrared absorbing particles of Examples 1 to 13 have a high content of the infrared absorbing particles of 15 mass% or more.

The present application claims priority to Japanese Patent Application No. 2021-131712, filed August 12, 2021, and Japanese Patent Application No. 2022-026872, filed February 24, 2022, with the Japanese Patent Office, the contents of which are incorporated herein by reference in their entirety.

### Description of the Reference Numeral

10, 30, 93, 103, 111 Organic-inorganic hybrid
infrared absorbing particle
11, 31, 91, 101 Infrared absorbing particle
12, 32, 92, 102 Resin capsule
110 Infrared absorbing particle
dispersion
112 Medium

## Claims

1. Organic-inorganic hybrid infrared absorbing particles comprising:
a resin capsule; and
an infrared absorbing particle placed in the resin capsule,
wherein a content of the infrared absorbing particle is 15 mass% or more and 55 mass% or less.

2. The organic-inorganic hybrid infrared absorbing particles according to claim 1, wherein a median diameter is 1 um or less and a standard deviation is 500 or less, in a particle size distribution based on the scattering intensity measured by a dynamic light scattering method.

3. The organic-inorganic hybrid infrared absorbing particles according to claim 1 or 2, wherein the resin capsule contains one or more resins selected from polyester resin, polycarbonate resin, acrylic resin, polystyrene resin, polyamide resin, vinyl chloride resin, olefin resin, fluororesin, polyvinyl acetate resin, polyurethane resin, acrylonitrile butadiene styrene resin, polyvinyl acetal resin, acrylonitrile styrene copolymer resin, ethylenevinyl acetate copolymer resin, phenol resin, epoxy resin, melamine resin, urea resin, unsaturated polyester resin, alkyd resin, polyimide resin, and silicone resin.

4. The organic-inorganic hybrid infrared absorbing particles according to any one of claims 1 to 3, wherein
the resin capsule contains a photocuring resin, and
the photocuring resin contains a resin that cures by irradiation with any of ultraviolet, visible, or infrared light.

5. The organic-inorganic hybrid infrared absorbing particles according to any one of claims 1 to 4,
wherein the infrared absorbing particle contains one or more oxides selected from a tungsten oxide represented by a general formula W_{y}O_{z} where W is tungsten and O is oxygen and z/y is 2.2 or more and 2.999 or less and a composite tungsten oxide represented by a general formula MₓW_{y}O_{z} where an element M is one or more elements selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Ti, Zr, Hf, V, Nb, Ta, Cr, Mo, Mn, Re, Fe, Ru, Os, Co, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Br, and I; x/y is 0.001 or more and 1 or less; and z/y is 2.0 or more and 3.0 or less.

6. An infrared absorbing particle dispersion comprising:
a medium; and
the organic-inorganic hybrid infrared absorbing particles according to any one of claims 1 to 5 that is placed in the medium.

7. A method of producing organic-inorganic hybrid infrared absorbing particles comprising:
a dispersion liquid preparation step of preparing a dispersion liquid containing infrared absorbing particles, a dispersant, and a dispersion medium;
a dispersion medium reduction step of evaporating the dispersion medium from the dispersion liquid;
a raw material mixture preparation step of mixing the infrared absorbing particles collected after the dispersion medium reduction step, a coating resin material, an organic solvent, an emulsifier, water, and a polymerization initiator, to prepare a raw material mixture;
a stirring step of stirring the raw material mixture while cooling; and
a polymerization step of performing, after a deoxygenation process to reduce oxygen content in the raw material mixture, polymerization reaction of the coating resin material,
wherein the polymerization initiator is a cationic polymerization initiator.
